# EUROPEAN PATENT APPLICATION

(11) **EP 1 502 789 A2**
(43) Date of publication of application: **02.02.2005**
(21) Application number: 04425496.9
(22) Date of filing: 07.07.2004
(51) Int. Cl.: B60J 7/06, B60J 5/06

(54) **Guide for movable coverings**

(30) Priority: 01.08.2003 IT MI20031596
(71) Applicant: Dona', Severino, 20090 Caleppio di Settala, Milano (IT)
(72) Inventor: Dona', Severino, 20090 Caleppio di Settala, Milano (IT)
(74) Representative: Pizzoli, Antonio

(57) **Abstract**

Guide (1) for movable coverings comprising an upper portion and a lower portion, said upper portion being provided with one or more rails (2, 3) in which one or more wheels (4, 5) of at least one carriage (6) arranged at both ends of a plurality of crossbars (7) suitable for supporting a tarpaulin (8) forming the upper wall of the movable covering can run, and said lower portion being provided with at least one rail (9) in which one or more wheels (10, 10') of at least one carriage (11) suitable for supporting a tarpaulin (12) forming a side wall of the movable covering can run, wherein one or more first cylinders (20) aligned along a same axis are fixed to the guide (1) so that they can be crossed by a bolt (23) for pivoting one or more second cylinders (21) aligned along a same axis and fixed to at least one upright (22) suitable for supporting the guide (1).

## Description

The present invention relates to a guide for movable coverings, and in particular to a guide for the crossbars of the movable coverings which can be fixed to the ground or onto transport means, such as trucks or trailer-trucks.

EP-B-621151, EP-A-925976 and EP-A-1090789 in the name of the same applicant disclose guides comprising an upper portion provided with rails on which the carriages of the crossbars supporting the upper portion of a movable covering can run. The lower portion of the guide is instead provided with a first rail in which the carriages supporting the lateral wall of the movable covering can run, as well as with a second rail in which the carriages arranged at an end of the uprights supporting the movable covering can run.

However, when the movable covering is relatively short, the uprights of said known guides, even if gathered at one end of the covering, limit the access from the sides in a significant manner. Furthermore, said guides are relatively cumbersome due to the two rails in the lower portion.

The object of the present invention is therefore to provide a guide free from such disadvantages. Said object is achieved by a guide, the main features of which are disclosed in the first claim and other features are disclosed in the remaining claims.

Thanks to the cylinders fixed to the guide and to the uprights, the guide according to the present invention not only can comprise a rail only in its lower portion, so as to have a reduced size, but can also be supported by uprights which, if necessary, can be easily disassembled by removing a bolt, so as to completely clear the lateral access to the movable covering.

According to an aspect of the invention, the cylinders can be joined to the guide by means of a particular support to be screwed beside the same guide, so as to simplify the manufacturing and the assembling of the movable covering.

Further advantages and features of the guide according to the present invention will be clear to those skilled in the art from the following detailed and non-limiting description of an embodiment thereof with reference to the attached drawings, wherein:
- figure 1 shows a partial cross-sectioned view of a movable covering comprising a guide according to the present invention; and
- figure 2 shows a partial side view of the guide and of an upright of the movable covering of figure 1.

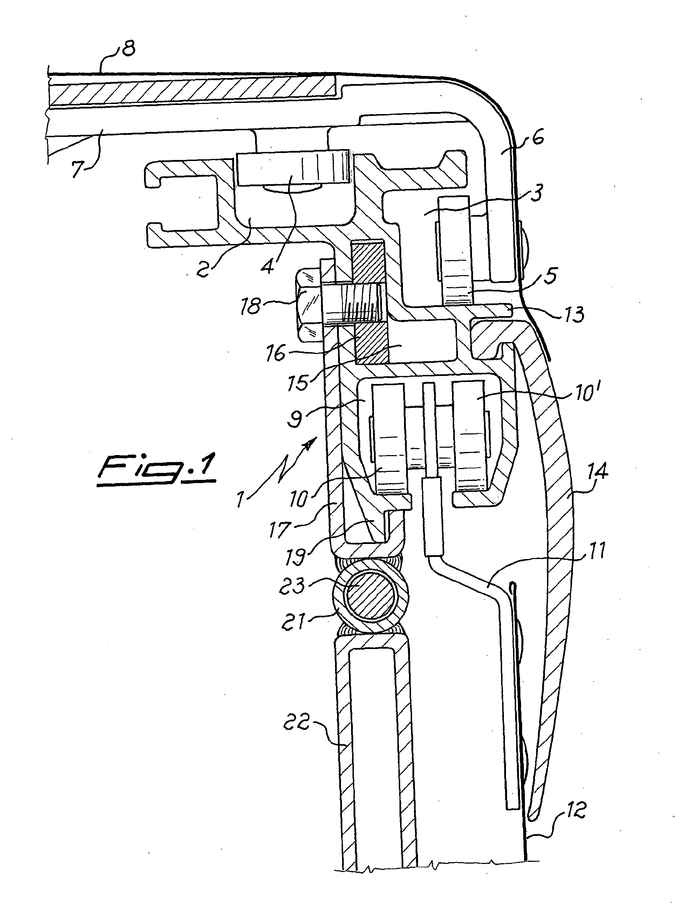

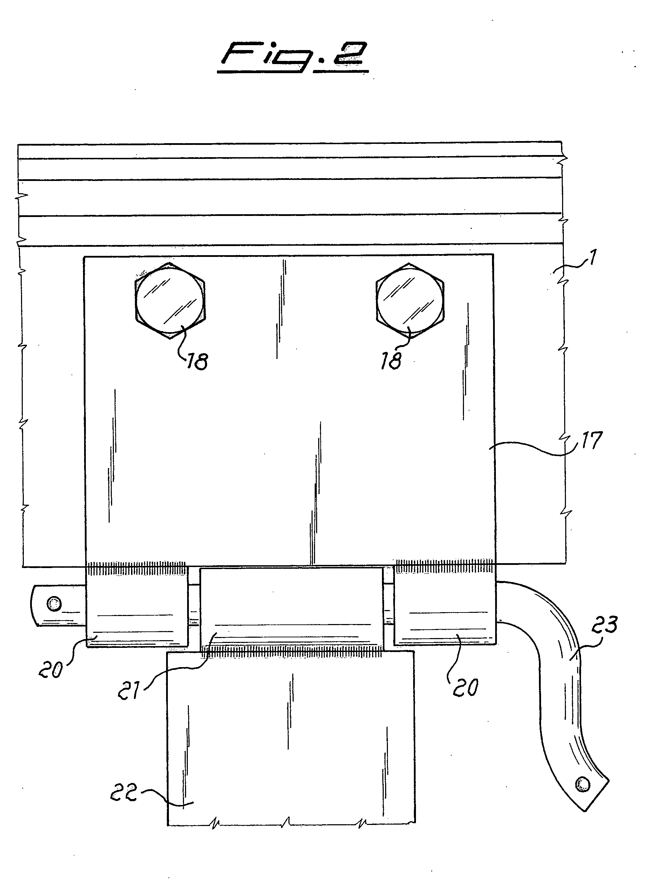

Referring to figures 1 and 2, it is seen that a movable covering, for example for trucks, comprises in a known way at least one guide 1 preferably made up of a single aluminum section bar suitably shaped, which is arranged longitudinally along both upper lateral edges of the same covering. The upper portion of guide 1 comprises in turn in a known way two grooves 2 and 3 acting as rails in which two pairs of wheels 4, 5 of a plurality of carriages 6 arranged at both ends of some crossbars 7 supporting a tarpaulin 8 forming the upper wall of the movable covering can run. The lower portion of guide 1 comprises instead a double rail 9 having a substantially C-shaped and downwardly open inner profile. Two pairs of aligned wheels 10, 10' of a plurality of carriages 11 supporting a tarpaulin 12 forming a side wall of the movable covering can run in the two lower tracks of rail 9. A longitudinal seat 13 is also made outside guide 1 for housing the end of a pelmet 14 protecting rail 9.

According to the invention, guide 1 comprises a longitudinal cavity 15 in which at least one plate 16 crossed by one or more threaded holes is arranged. Also the vertical inner wall of guide 1 is crossed by one or more holes which are aligned with the holes of plate 16 and connect cavity 15 with the outside of guide 1. Also the vertical wall of a support 17 is crossed by one or more holes which are aligned with the holes of plate 16 and/or of the inner vertical wall of guide 1, so that this support can be fixed beside guide 1 by inserting screws 18 into said holes, so as to be screwed to plate 16. Support 17 has a J-shaped cross-section so that its lower portion can house a longitudinal rib 19 protruding under guide 1, so as to firmly couple support 17 to guide 1. One or more first cylinders 20 aligned along a same horizontal axis are soldered under support 17. At least one second cylinder 21 fixed onto a vertical beam 22 acting as an upright for supporting guide 1 can be arranged between the first cylinders 20, aligned along the same horizontal axis. A bolt 23 crosses cylinders 20 and 21 for pivoting upright 22 to guide 1. Upright 22 is preferably divided into two portions mutually connected by a hinge (not visible in the figure), which can be temporarily locked, so that the lower end of the upright can be easily inserted or extracted from a seat arranged at the base of the surface covered by the movable covering.

With the hinge locked, the two portions of upright 22 are rigidly aligned to each other, so that the latter firmly supports guide 1. For removing upright 22 from guide 1 it is sufficient to unlock the hinge, to fold the two portion of the upright and to pull out the bolt from cylinders 20 and 21.

## Claims

1. Guide (1) for movable coverings comprising an upper portion and a lower portion, said upper portion being provided with one or more rails (2, 3) in which one or more wheels (4, 5) of at least one carriage (6) arranged at both ends of a plurality of crossbars (7) suitable for supporting a tarpaulin (8) forming the upper wall of the movable covering can run, and said lower portion being provided with at least one rail (9) in which one or more wheels (10, 10') of at least one carriage (11) suitable for supporting a tarpaulin (12) forming a side wall of the movable covering can run, **characterized in that** one or more first cylinders (20) aligned along a same axis are fixed to the guide (1) so that they can be crossed by a bolt (23) for pivoting one or more second cylinders (21) aligned along a same axis and fixed to at least one upright (22) suitable for supporting the guide (1).

2. Guide (1) according to the previous claim, **characterized in that** said first cylinders (20) are joined to a support (17) fixed beside the guide (1).

3. Guide (1) according to the previous claim, **characterized in that** said support (17) comprises a vertical plate provided with holes for being screwed to the guide (1).

4. Guide (1) according to the previous claim, **characterized in that** the vertical plate of the support (17) is provided with one or more holes aligned with one or more holes made in an inner vertical wall of the guide (1), as well as with one or more threaded holes made in at least one plate (16) arranged in a longitudinal cavity (15) of the guide (1), so that the support (17) can be screwed to the plate (16) by means of one or more screws (18).

5. Guide (1) according to one of claims 2 to 4, **characterized in that** said support (17) has a J-shaped cross-section so that its lower portion can house a longitudinal rib (19) protruding under the guide (1).

6. Guide (1) according to one of the previous claims, **characterized in that** the upright (22) is divided into two portions mutually connected by a hinge which can be temporarily locked, so that the two portions of the upright (22) are rigidly aligned to each other.

7. Guide (1) according to one of the previous claims, **characterized in that** said first (20) and second (21) cylinders are aligned along a same horizontal axis when they are crossed by the bolt (23).
